# EUROPÄISCHE PATENTSCHRIFT

(11) **EP 1 997 847 B1**
(45) Veröffentlichungstag und Bekanntmachung des Hinweises auf die Patenterteilung: **21.07.2010**
(21) Anmeldenummer: 07109201.9
(22) Anmeldetag: 30.05.2007
(51) Int. Cl.: C08J 5/18, C08L 29/14, C08K 5/098, C08K 3/00, C08K 5/00

(54) **Verwendung von Lithiumsalzen als Antihaftmittel für Folien in Verbundsicherheitsverglasungen**
Use of lithium salts as anti-adhesive agents for films in composite safety glazing
Utilisation de sels de lithium en tant qu'anti-adhésif pour feuilles dans des vitrifications de sécurité composites

(43) Veröffentlichungstag der Anmeldung: 03.12.2008
(73) Patentinhaber: Kuraray Europe GmbH, 65926 Frankfurt am Main (DE)
(72) Erfinder: Keller, Uwe, 53177, Bonn (DE)
(74) Vertreter: Kisters, Michael Marcus

(56) Entgegenhaltungen:
- WO-A-99/61243
- WO-A-2004/112054

## Beschreibung

### Technisches Gebiet

Die Erfindung betrifft die Verwendung von Lithiumsalzen als Antihaftmittel für weichmacherhaltige Folien auf der Basis von teilacetalisierten Polyvinylalkoholen, insbesondere auf der Basis von Polyvinylbutyral (PVB).

### Stand der Technik

Die Sicherheitseigenschaften von Verbundglas mit Polyvinylbutyral-Folie (PVB-Folie) hängen bekanntermaßen von der Haftkraft zwischen Folie und Glas ab. Ist die Haftkraft sehr hoch, ist beim mechanischen Versagen des Verbundglases - z.B. durch Einwirkung eines Stoßes - ein Klebenbleiben der Glasbruchstücke an der Folie zwar gewährleistet, so dass sich scharfkantige Glassplitter nicht ablösen können, jedoch kann ein aufprallendes Objekt das Verbundglas relativ leicht durchdringen, da die PVB-Folie so stark am Glas haftet, dass sie sich an der Auftreffstelle kaum elastisch verformen kann und somit auch nur wenig zum Abbremsen des Objektes beiträgt. Liegt die Haftung zum Glas auf einem niedrigeren Niveau, kann sich die PVB-Folie an der Auftreffstelle unter Dehnbeanspruchung vom Glas ablösen und verformen, wodurch das auftreffende Objekt abgebremst wird.

Da eine zu geringe Haftung andererseits das Ablösen von Glasbruchstücken von der PVB-Folie erleichtert und somit das Verletzungsrisiko für Personen erhöht, strebt man in der Praxis einen Kompromiss zwischen hoher und niedriger Haftkraft, also ein mittleres Haftungsniveau an, um beide Anforderungen - Splitterbindung und Penetrationshemmung auf möglichst hohem Niveau zu erfüllen.

Bei dem üblicherweise verwendeten Float-Glas tritt zusätzlich ein Haftungsunterschied durch die unterschiedliche chemische Zusammensetzung der beiden Oberflächen von Float-Glas auf. Hierbei weist die so genannte Zinn-Seite - die Seite, die im Float-Glas-Verfahren in Kontakt mit dem flüssigen Zinn steht und beim fertigem Produkt mit Zinn dotiert ist - gegenüber der sog. Feuerseite andere Haftungseigenschaften zur PVB-Folie auf. Eine in Bezug auf Haftungskonstanz optimierte PVB-Folie sollte hingegen trotz des Unterschiedes zwischen den beiden Glasseiten sowie der häufig anzutreffenden Chargen- und Herstellerabhängigen Qualitätsschwankungen von Glas ein von der Orientierung des Glases unabhängiges Haftungsniveau aufweisen.

Zur Einstellung der Haftung von PVB-Folie auf Glas werden seit langem Kalium- und Natriumsalze organischer Säuren verwendet. Allerdings zeigen Natrium- und Kaliumacetat oder die jeweiligen Formiate deutliche Nachteile im Bezug auf die Bewitterungsstabilität freiliegender Kanten des Verbundsicherheitsglases. Wegen der ausgeprägten Hygroskopizität dieser Salze wird ein Anreichern von eindringendem Wasser an der Grenzfläche PVB-Folie/Glas begünstigt, was die Haftung im Randbereich des Verbundsicherheitsglases (VSG) soweit herabsetzt, dass eine Ablösung der Folie vom Glas resultieren kann. Als bereits mit bloßem Auge sichtbarer Defekt, der ebenfalls mit der Hygroskopizität in Zusammenhang steht, ist das Ausbilden eines weißen Schleiers im Kantenbereich von mit solchen Folien hergestellten VSG bei sehr feuchten Umgebungsbedingungen. Dieses als Randaufweißen bezeichnete Phänomen wird durch eingedrungenen Wasserdampf bzw. Kondensat in Wechselwirkung mit dem Folienbestandteil Kalium- bzw. Natriumacetat hervorgerufen und wird als verbesserungswürdiger optischer Defekt bei Windschutzscheiben bzw. Architekturverglasung angesehen.

Salze von Erdalkalimetallen wie Magnesiumacetat zeigen diesen Nachteil in deutlich abgeschwächtem Maße, so dass diese ebenfalls als Antihaftmittel verwendet werden. Allerdings haben diese in Kombination mit bestimmten hydrolyseanfälligen Weichmachern, insbesondere Estern der Adipinsäure mit unverzweigten Alkoholen und Glykolestern mit unverzweigten Carbonsäuren, den Nachteil, dass die Haftung zum Glas von der thermischen Belastung des VSG abhängen kann. Damit können sich Schwankungen der Haftung in Abhängigkeit der Druck- und Temperaturführung des bei der VSG-Herstellung häufig eingesetzten Autoklaven-Prozesses ergeben. Des Weiteren stellt sich bei Verwendung von Magnesiumacetat als alleinigem Antihaftmittel eine stark unsymmetrische Haftung an den chemisch unterschiedlichen Seiten von Floatglas, d.h. der Feuer- und der Zinn-Seite ein. Dies ist unerwünscht, da dann ja die mechanischen Eigenschaften des VSG je nach Orientierung des Glases zur Zwischenschicht variieren können.

Als Antihaftmittelsystem sind auch Kombinationen von Alkalimetallen wie Natrium und/oder Kaliumsalzen mit Magnesiumsalzen Stand der Technik, z.B. aus EP 1 094 939 B1 oder WO 2006/102049 A2.

In der Patentliteratur werden häufig Gemische aus Alkalimetall- und Erdalkalimetallsalzen als Antihaftmittel für PVB-Folien beschrieben. So offenbaren EP 1 094 939 B1 oder WO 2006/102049 A2 die Kombination von Alkalimetallsalzen wie Natrium- und/oder Kaliumsalzen mit Magnesiumsalzen als Antihaftmittelsystem für Folien zur Herstellung von Verbundsicherheitsglas. In diesen Druckschriften sind allerdings nur Gemische aus Na/Mg- und/oder K/Mg-Salze explizit offenbart. Folien mit diesen Haftungsregulatoren zeigen die genannten Nachteile durch Randaufweißen.

### Aufgabe

Aufgabe der vorliegenden Erfindung war es, neue Haftungsregulatoren bzw. Mischungen von Haftungsregulatoren für PVB-Folien bereit zu stellen, die eine geringe Feuchtigkeitsempfindlichkeit der PVB-Folie zur Folge haben.

Überrachenderweise wurde gefunden, dass Lithiumsalze in PVB-Folien in erheblich geringerer Menge als Natrium und/oder Kaliumsalze haftungsregulierend wirken und eine geringere Feuchtigkeitsempfindlichkeit der PVB-Folie hervorrufen.

Die Verwendung von Lithiumsalzen in Zwischenfolien für VSG, ggf. in Kombination mit Erdalkalimetallsalzen ist dem Stand der Technik explizit nicht zu entnehmen.

Ein Grund hierfür kann der im Vergleich zu Natrium und Kalium vielfach höhere Preis von Lithiumsalzen sein, der potentielle Verwender bislang davon abgehalten hat, Lithiumsalze als Komponente der Folienrezeptur zu evaluieren und einzusetzen.

Weiterhin könnte die gegenüber Natriumsalzen hohe Hygroskopie der Lithiumsalze den Fachmann abgehalten haben, den Effekt dieser Salze auf die Haftung von PVB-Folien auf Glas zu prüfen.
Überraschenderweise wurde sogar das Gegenteil festgestellt, nämlich, dass Lithiumsalze ein geringeres Randaufweißen von hiermit hergestellten PVB-Folien hervorrufen.

### Darstellung der Erfindung

Gegenstand der vorliegenden Erfindung ist eine Folie aus weichmacherhaltigem Polyvinylacetal, enthaltend mindestens 5 ppm Lithiumionen als Haftungsregulator bzw. optional zusätzlich mindestens 10 ppm mindestens eines Erdalkalimetallions und/oder Zinkionen, jeweils bezogen auf die Folienmischung.

Lithiumsalze sind teurer als die entsprechenden Natrium- oder Kaliumverbindungen. Zieht man jedoch in Betracht, dass Antihaftmittel im Allgemeinen in sehr geringen Mengen der PVB-Folie zugesetzt werden, würde sich die Folie selbst bei einer vollständigen Substitution von Natrium- oder Kaliumverbindungen durch Lithiumsalze nicht wesentlich verteuern. Eine geringe Verteuerung wird zudem durch die technischen Vorteile von Lithiumsalzen klar aufgewogen.

Die Erfindung besteht in der Verwendung von Lithiumsalzen optional kombiniert mit mindestens einem Erdalkalimetallsalz, ausgewählt aus der Gruppe Magnesium (bevorzugt), Zink, Calcium, als Antihaftmittel in PVB-Folien.

Bevorzugt enthalten die erfindungsgemäßen Folien maximal 100 ppm Lithiumionen. Es kann zur Erzielung eines bestimmten Haftungsniveaus der Folie an Glas erforderlich sein, mehr als 5 ppm Lithiumionen einzusetzen, z.B. mehr als 10 ppm oder mehr als 20, 30, 40, 50, 70, oder 90 ppm.

Der Anteil an Erdalkali- und/oder Zinkionen sollte insgesamt 100 ppm nicht überschreiten, geeignet sind auch hier Konzentrationen von kumuliert 20, 30, 40, 50, 70, oder 90 ppm.

Als Erdalkaliionen werden bevorzugt Calzium und/oder Magnesium verwendet, wobei als Gegenion das des Lithiumsalzes eingesetzt werden kann.

Bevorzugt werden die Erdalkalimetall- und/oder Zinkionen zu den Lithiumionen in einem Konzentrationsverhältnis von 10:1 bis 1:1 (in ppm), bevorzugt 5:1 bis 2:1, eingesetzt. Die Erdalkalimetall-, Zink und Lithiumionen werden bevorzugt in Form von Salzen organischer Säuren, insbesondere verzweigten oder unverzweigten Carbonsäuren mit 1 bis 15 Kohlenstoffatomen, besonders bevorzugt die Formiate, Acetate, 2-Ethylbutyrate und 2-Ethylhexanoate verwendet.

Die erfindungsgemäßen Folien enthalten bevorzugt neben Lithiumionen keine weiteren Alkalimetallionen d.h. 0 ppm. Dies ist technisch nur schwer erzielbar, so dass die Folie besonders bevorzugt eine Gesamt-Konzentration von Alkalimetallionen mit Ausnahme von Lithiumionen von weniger als 25 ppm insbesondere weniger als 15 ppm, bevorzugt weniger als 10 ppm, bezogen auf die jeweiligen Metallionen und die Folienmischung aufweist.

Die vorliegende Erfindung ermöglicht es, Folien mit einem sehr niedrigen Haftungsniveau an Glas herzustellen. Weiterhin kann das angestrebte Haftungsniveau der Folie mit geringer Schwankung produziert werden kann, das im Verbund auf lange Zeit trotz Hitze- und Feuchte-Einfluss unverändert erhalten bleibt, also weder zu höherer noch zu niedrigerer Haftung driftet.

Der Vorteil bei der Verwendung von organischen Lithiumsalzen wie Lithiumacetat als Antihaftmittel liegt in deren im Vergleich zu Kalium- und Natriumacetat deutlich geringeren Neigung zum Randaufweißen der Folie, wobei äquimolare Zusätze an Lithium-, Natrium- und Kaliumacetat verglichen werden.

Wird Lithiumacetat als Haftungsregulator eingesetzt, können natürlich sowohl dessen wasserfreie Form, als auch eine hydratisierte Form wie z.B. das Dihydrat verwendet werden. Gleiches gilt für optional zugesetzte Erdalkalimetall- oder Zinksalze wie Magnesiumacetat. Auch kürzer- und längerkettige lineare als auch verzweigte organische Carbonsäuren wie etwa Formiat, Propionat, Butyrat, 2-Ethylbutyrat, 2-Ethylhexanoat können als Gegenion fungieren. Ebenfalls Carbonsäuren, in denen die Carboxylgruppe direkt oder indirekt mit einem aromatischen Rest verknüpft ist, wie etwa Benzoat, Salicylat, Naphthoat. Selbstverständlich kann das Gegenion auch ein mehrwertiger organischer Säurerest oder auch ein polymerer Säurerest sein, wie z.B. Fumarat oder Adipat. Auch stärker komplexierende Gegenionen wie z.B. Acetylacetonat können verwendet werden. Das gleiche gilt für die Zugabe der Lithiumionen in Form anorganischer Salzes wie etwa Carbonat, Sulfat, Nitrat, Chlorid, da diese Gegenionen im Allgemeinen mit in der PVB-Folie etwaig enthaltenen organischen Gegenionen austauschen können.

Erfindungsgemäße Folien enthalten einen oder mehrere Weichmacher in Anteilen von 10 bis 40 Gew.% bezogen auf die Gesamtformulierung.

Zur Gruppe der geeigneten Weichmacher zählen zum Beispiel Di-(2-butoxyethyl)-adipat (DBEA), Di-(2-butoxyethyl)-sebacat (DBES), Di-(2-butoxyethyl)-azelat, Di-(2-butoxyethyl)-glutarat. Di-(2-butoxyethoxyethyl)-adipat (DBEEA), Di-(2-butoxyethoxyethyl)-sebacat (DBEES), Di-(2-butoxyethoxyethyl)-azelat, Di-(2-butoxyethoxyethyl)-glutarat, Di-(2-hexoxyethyl)-adipat, Di-(2-hexoxyethyl)-sebacat, Di-(2-hexoxyethyl)-azelat, Di-(2-hexoxyethyl)-glutarat, Di-(2-hexoxyethoxyethyl)-adipat, Di-(2-hexoxyethoxyethyl)-sebacat, Di-(2-hexoxyethoxyethyl)-azelat, Di-(2-hexoxyethoxyethyl)-glutarat, Di-(2-butoxyethyl)-phthalat und/oder Di-(2-butoxyethoxyethyl)-phthalat.

Diese Weichmacher können auch mit anderen Weichmachern, die aufgrund ihres apolaren Charakters in den gewünschten Mengen inkompatibel zu dem eingesetzten PVB-Harz sind, kombiniert werden.

Es ist auch möglich, Weichmachergemische aus Weichmachern geringer Polarität wie die o.g. Weichmacher und höherer Polarität (Standard-Weichmacher) einzusetzen. Der Anteil der Standard-Weichmacher höherer Polarität kann zwischen 5 - 15 Gew.%, bezogen auf die Gesamtformulierung, liegen.

Zu den Standard-Weichmachern gehören z.B. Dialkyladipate mit einem Alkylrest mit mehr als 6 Kohlenstoffatomen und Oligoglycolsäureester mit einem Carbonsäurerest mit mehr als 7 Kohlenstoffatomen insbesondere Triethylenglykol-di-2-ethylhexanoat (3G8), Dioctyladipat (DOA), Diethylenglycol-di-2-ethylhexanoat und/oder Tetraethylenglycol-di-2-ethylhexanoat.

Selbstverständlich können erfindungsgemäße Folien auch nur einen oder mehrere Standard-Weichmacher enthalten. Besonders bevorzugt ist der Einsatz eines Gemischs aus 3G8 und DBEA im Massenverhältnis 5:1 bis 20:1.

Neben den Weichmachern können erfindungsgemäße Folien weitere, dem Fachmann bekannte Zusätze enthalten wie Restmengen an Wasser, UV-Absorber, Antioxidantien, optische Aufheller, Stabilisatoren, Farbmittel, Verarbeitungshilfsmittel, und/oder oberflächenaktive Stoffe.

Die als Polyvinylacetal verwendeten teilacetalisierten Polyvinylalkohole werden in bekannter Weise durch Acetalisierung von hydrolysierten Polyvinylestern hergestellt. Als Aldehyde können beispielsweise Formaldehyd, Acetaldehyd, Propionaldehyd oder Butyraldehyd verwendet werden. Das bevorzugt eingesetzte Polyvinylbutyral enthält 10 bis 25 Gew.%, vorzugsweise 17 bis 23 Gew.% und besonders bevorzugt 19 bis 21 Gew.% Vinylalkoholreste, und/oder 0 bis 20 Gew.%, bevorzugt 0,5 bis 2,5 Gew.% Acetatreste.

Der Wassergehalt der erfindungsgemäßen Mischung wird bevorzugt auf 0,15 bis 0,8 Gew.%, insbesondere auf 0,3 bis 0,5 Gew.% eingestellt.

Erfindungsgemäße Polymermischungen können zusätzlich weitere Stabilisatoren wie z.B. ein oder mehrere Verbindungen aus der Gruppe der Organophosphate oder Organophosphite, wie z.B. in WO 03/033583 A1 offenbart, und/oder die üblichen phenolischen Antioxidantien (z.B. Irganox 1070) bzw. sterisch gehinderte Aminstabilisatoren (z.B. Uvinul 4050 der BASF) d.h. sog. HAS oder HALS-Stabilisatoren enthalten. Die zusätzlichen Stabilisatoren können jeweils in den für die Organophosphine genannten Mengen eingesetzt werden.

Ein weiterer Gegenstand der vorliegenden Erfindung sind Verbundverglasungen, bestehend aus mindestens 2 Glasscheiben und mindestens einer erfindungsgemäßen Folie.

Die Herstellung solcher Verbundverglasungen unter erhöhtem oder erniedrigtem Druck und erhöhter Temperatur z.B. in Autoklaven und/oder Vakuumlaminatoren ist dem Fachmann bekannt.

### Messmethoden

### Randaufweißen

Das Randaufweißen wird mithilfe einer Bedunstungskammer, in der konstant 50 °C bei 100%-iger Sättigung der Atmosphäre mit Wasserdampf eingestellt sind, entsprechend der EN ISO 12543-4 geprüft. Sauber besäumte VSG-Abschnitte, in denen die PVB-Folie bündig mit den Glaskanten abschließt, werden 14 Tage lang in der Kammer aufbewahrt. Unmittelbar nach Entnahme wird mit einem mm-Maß die von der Folienkante ausgehende milchige Eintrübung der Folie ausgemessen.

### Kompressionsschertest

Zur Beurteilung der Haftung einer PVB-Folie wird der Kompressionsschertest in Anlehnung an DE 197 56 274 A1 an einem Glas/Glaslaminat ohne Solarzelle durchgeführt. Zur Herstellung der Prüfkörper wird die zu prüfende PVB-Folie zwischen zwei ebene Silikatglasscheiben des Formats 300 mm x 300 mm mit einer Dicke von 2 mm gebracht, in einem Vorverbundofen mit Kalanderwalzen zu einem Glas-Vorverbund entlüftet und anschließend in einem Autoklav bei einem Druck von 12 bar und bei einer Temperatur von 140 °C innerhalb von insgesamt 90 min. zu einem ebenen Verbundsicherheitsglas verpresst. Aus dem so hergestellten Verbundsicherheitsglas werden 10 Proben mit den Maßen 25,4 mm x 25,4 mm geschnitten. Diese werden unter einem Winkel von 45° in eine Prüfapparatur gemäß DE 197 56 274 A1 eingespannt, wobei die Tiefe der Aussparungen ca. 2/3 der jeweiligen Glasdicken beträgt. Die obere Hälfte wird mit einer stetig steigenden, genau vertikal nach unten gerichteten Kraft beaufschlagt, bis es zu einer Abscherung innerhalb des Prüfkörpers, d. h. der zu prüfenden Verbundsicherheitsglasscheiben, kommt.

Die Prüfparameter sind wie folgt:

| | |
|---|---|
| Prüfkörper: | quadratisch 25,4 mm x 25,4 mm |
| Verlegung: | untere Scheibe jeweils mit der Luft- bzw. Feuerseite zur Folie (Luft/Luft), oder obere und untere Scheibe jeweils mit der Zinnseite zur Folie (Bad/Bad) |
| Lagerung vor dem Versuch: | 4h bei Normklima 23°C/50% RLF |
| Vorschub: | 2,5 mm/min |
| Probenanzahl: | 10 |
| Auswertung: | Maximalkraft, die zur Abscherung der Folie vom Glas benötigt wird. Die Kraft wird auf die Probenfläche bezogen (in N/mm² oder psi) |

Für jedes Beispiel wird die bei der Abscherung ausgeübte Kraft von zehn gleichen Prüfkörpern linear gemittelt. Soweit in den nachfolgenden Beispielen und den Ansprüchen auf den mittleren Kompressionsschertest-Wert Bezug genommen wird, ist damit dieser Mittelwert aus 10 Messungen gemeint. Im Übrigen wird auf die DE 197 56 274 A1 verwiesen.

Alle erfindungsgemäßen Folien der Beispiele erfüllen die Anforderungen, die üblicherweise an PVB-Folie für Verbundsicherheitsglas gestellt werden, das sind im Einzelnen: hohe Transparenz bzw. Abwesenheit von Trübung, geringe Eigenfarbe und hier insbesondere niedriger Gelbwert, gute mechanische Festigkeit, geringer Eigengeruch, gute und gleichmäßige Klebewirkung zu Glas.

In der nachfolgenden Tabelle sind die Vergleichsbeispiele mit V1-V5, die erfindungsgemäßen Beispiele mit Bsp. 1 - Bsp.5 gekennzeichnet.
Es zeigt sich, dass die Lithiumionen enthaltenden, erfindungsgemäßen Folien ein erheblich geringeres Randaufweißen zeigen, als Folien, die andere Alkalimetallionen enthalten.

Die haftungsausgleichende Wirkung von Lithiumsalzen entspricht dem der bekannten Natrium- oder Kaliumsalzen, d.h. Lithiumsalze sind in gleicher Weise mit Magnesiumsalzen kombinierbar

| Beispiel | **V1** | **V2** | **Bsp. 1** | **V 3** | **V4** | **Bsp. 2** | **V5** | **Bsp. 3** | **Bsp. 4** | **Bsp. 5** |
|---|---|---|---|---|---|---|---|---|---|---|
| PVB | 72,5 | 72,5 | 72,5 | 72,5 | 72,5 | 72,5 | 72,5 | 72,5 | 72,5 | 72,5 |
| Weichmacher 3G8 | 25 | 25 | 25 | 25 | 25 | 25 | 25 | 25 | 25 | 25 |
| Weichmacher DBEA | 2,5 | 2,5 | 2,5 | 2,5 | 2,5 | 2,5 | 2,5 | 2,5 | 2,5 | 2,5 |
| TINUVIN 328 | 0,15 | 0,15 | 0,15 | 0,15 | 0,15 | 0,15 | 0,15 | 0,15 | 0,15 | 0,15 |
| KALIUM-ACETAT | 0,0350 | - | - | 0,0100 | - | - | - | - | - | - |
| Natriumacetat | - | 0,0294 | - | - | 0,0084 | - | - | - | - | - |
| Lithiumacetat Dihydrat | - | - | 0,0364 | - | - | 0,0104 | - | 0,0078 | 0,0078 | 0,0156 |
| MAGNESIUM-ACETAT | - | - | - | 0.03 | 0.03 | 0.03 | 0.03 | 0.03 | 0.02 | 0,01 |
| ppm K / Na / Li | 140 (K) | 82 (Na) | 25 (Li) | 40 (K) | 23 (Na) | 7 (Li) | - | 5 (Li) | 5 (Li) | 10 |
| ppm Mg | 0 | 0 | 0 | 34 | 34 | 34 | 34 | 34 | 23 | 12 |
| Wassrgehalt der PVB-Folie im Verbund in % | 0,45 | 0,45 | 0,45 | 0,45 | 0,45 | 0,45 | 0,45 | 0,45 | 0,45 | |
| Schertest F/F | 18,7 | 31,6 | 31,8 | 15,7 | 14,7 | 15 | 32,9 | 18,8 | 15,8 | 14,7 |
| Schertest Sn/Sn | 17,9 | 18,1 | 19,3 | 13,6 | 11 | 12,2 | 17,1 | 15 | 12,1 | 13,2 |
| mm weißer Rand nach 14 Tagen Bedunstung bei 50°C | 2-3 | 2-3 | 1 | 0 | 0 | 0 | 0 | 0 | 0 | 0 |

## Patentansprüche

1. Folie aus weichmacherhaltigem Polyvinylacetal, enthaltend mindestens 5 ppm Lithiumionen und mindestens 10 ppm mindestens eines Erdalkalimetallions und/oder Zinkionen (jeweils bezogen auf die Folienmischung) als Haftungsregulator.

2. Folie nach Anspruch 1, **dadurch gekennzeichnet, dass** die Erdalkalimetall- Zink- und/oder Lithiumionen in Form von Salzen organischer Säuren eingesetzt werden.

3. Folie nach einem der Ansprüche 1 oder 2, **dadurch gekennzeichnet, dass** die Erdalkalimetall- und/oder Zinkionen zu den Lithiumionen in einem Konzentrationsverhältnis von 10:1 bis 1:1 eingesetzt werden.

4. Folie nach einem der Ansprüche 1 bis 3, **dadurch gekennzeichnet, dass** die Folien eine Konzentration von Alkalimetallionen mit Ausnahme von Lithiumionen von weniger als 25 ppm, bezogen auf die jeweiligen Metallionen und die Folienmischung aufweisen.

5. Folie nach einem der Ansprüche 1 bis 4, **dadurch gekennzeichnet, dass** die Folien mindestens einen der Weichmacher ausgewählt aus der Gruppe Di-(2-butoxyethyl)-adipat (DBEA), Di-(2-butoxyethyl)-sebacat (DBES), Di-(2-butoxyethyl)-azelat, Di-(2-butoxyethyl)-glutarat. Di-(2-butoxyethoxyethyl)-adipat (DBEEA), Di-(2-butoxyethoxyethyl)-sebacat (DBEES), Di-(2-butoxyethoxyethyl)-azelat, Di-(2-butoxyethoxyethyl)-glutarat, Di-(2-hexoxyethyl)-adipat, Di-(2-hexoxyethyl)-sebacat, Di-(2-hexoxyethyl)-azelat, Di-(2-hexoxyethyl)-glutarat, Di-(2-hexoxyethoxyethyl)-adipat, Di-(2-hexoxyethoxyethyl)-sebacat, Di-(2-hexoxyethoxyethyl)-azelat, Di-(2-hexoxyethoxyethyl)-glutarat, Di-(2-butoxyethyl)-phthalat und/oder Di-(2-butoxyethoxyethyl)-phthalat enthalten.

6. Folie nach Anspruch 5, **dadurch gekennzeichnet, dass** die Folie ein Weichmachergemisch aus Triethylenglykol-di-2-ethylhexanoat (3G8) und Di-(2-butoxyethyl)-adipat (DBEA) im Massenverhältnis 5:1 bis 20:1 enthält.

## Claims

1. A film made from plasticised polyvinyl acetal, containing at least 5 ppm lithium ions and at least 10 ppm of at least one alkaline earth metal ion and/or zinc ions (each based on the film mixture) as an adhesion regulator.

2. The film according to claim 1, **characterised in that** the alkaline earth metal, zinc and/or lithium ions are used in the form of salts of organic acids.

3. The film according to one of the claims 1 or 2, **characterised in that** the alkaline earth metal and/or zinc ions are used in a concentration ratio of between 10:1 and 1:1 relative to the lithium ions.

4. The film according to one of the claims 1 to 3, **characterised in that** the films exhibit an alkaline earth metal ion concentration, excluding lithium ions, of below 25 ppm relative to the metal ions in each case and the film mixture.

5. The film according to one of the claims 1 to 4, **characterised in that** the films contain at least one of the plasticisers chosen from the group dibutoxyethyl adipate (DBEA), dibutoxyethyl sebacate (DBES), dibutoxyethyl azelate, dibutoxyethyl glutarate, dibutoxyethoxyethyl adipate (DBEEA), dibutoxyethoxyethyl sebacate (DBEES), dibutoxyethoxyethyl azelate, dibutoxyethoxyethyl glutarate, dihexoxyethyl adipate, dihexoxyethyl sebacate, dihexoxyethyl azelate, dihexoxyethyl glutarate, dihexoxyethyl adipate, dihexoxyethoxyethyl sebacate, dihexoxyethoxyethyl azelate, dihexoxyethoxyethyl glutarate, dibutoxyethyl phthalate and/or dibutoxyethoxyethyl phthalate.

6. The film according to claim 5, **characterised in that** the film contains a plasticiser mixture made up of triethylene glycol bis(2-ethylhexanoate) (3G8) and dibutoxyethyl adipate (DBEA) in a mass ratio of between 5:1 and 20:1.

## Revendications

1. Feuille en acétal de polyvinyle pourvu de plastifiants, contenant en tant que régulation d'adhésion au moins 5 ppm d'ions de lithium et au moins 10 ppm d'au moins un ion de métaux alcalino-terreux et/ou d'ions de zinc (respectivement par rapport au mélange de la feuille).

2. Feuille selon la revendication 1, **caractérisée en ce que** lesdits ions de métaux alcalino-terreux, de zinc et/ou de lithium sont mis en oeuvre sous forme de sels d'acides organiques.

3. Feuille selon l'une des revendications 1 ou 2, **caractérisée en ce que** lesdits ions de métaux alcalino-terreux et/ou ions de zinc sont mis en oeuvre dans un rapport compris entre 10:1 et 1:1, par rapport à la concentration desdits ions de lithium.

4. Feuille selon l'une des revendications 1 à 3, **caractérisée en ce que** lesdites feuilles présentent une concentration d'ions de métaux alcalins, à l'exception des ions de lithium, inférieure à 25 ppm, exprimée pour chacun des ions métalliques par rapport au mélange de la feuille.

5. Feuille selon l'une des revendications 1 à 4 **caractérisée en ce que** lesdites feuilles contiennent au moins un des plastifiants choisis dans le groupe constitué par l'adipate de di-(2-butoxyéthyle) (DBEA), le sebaçate de di-(2-butoxyéthyle) (DBES), l'azélate de di-(2-butoxyéthyle), le glutarate de di-(2-butoxyéthyle), l'adipate de di-(2-butoxyéthoxyéthyle) (DBEEA), le sébaçate de di-(2-butoxyéthoxyéthyle) (DBEES), l'azélate de di-(2-butoxyéthoxyéthyle), le glutarate de di-(2-butoxyéthoxyéthyle), l'adipate de di-(2-hexoxyéthyle), le sébaçate de di-(2-hexoxyéthyle), l'azélate de di-(2-hexoxyéthyle), le glutarate de di-(2-hexoxyéthyle), l'adipate de di-(2-hexoxyéthoxyéthyle), le sébaçate de di-(2-hexoxyéthoxyéthyle), l'azélate de di-(2-hexoxyéthoxyéthyle), le glutarate de di-(2-hexoxyéthoxyéthyle), le phtalate de di-(2-butoxyéthyle) et/ou le phtalate de di-(2-butoxyéthoxyéthyle).

6. Feuille selon la revendication 5, **caractérisée en ce que** ladite feuille contient un mélange de plastifiants constitué de di-2-éthylhexanoate de triéthylèneglycol et d'adipate de di-(2-butoxyéthyle) dans un rapport massique compris entre 5:1 et 20:1.
